# EUROPEAN PATENT APPLICATION

(11) **EP 1 507 084 A1**
(43) Date of publication of application: **16.02.2005**
(21) Application number: 04011233.6
(22) Date of filing: 12.05.2004
(51) Int. Cl.: F03D 7/02

(54) **Horizontal axis wind turbine with telescoping blades**

(30) Priority: 12.08.2003 JP 2003292404
(71) Applicant: Miyazaki, Kunio, Kyoei Bldg. 4F, Tokyo 170-0013 (JP)
(72) Inventor: Miyazaki, Kunio, Kyoei Bldg. 4F, Tokyo 170-0013 (JP)
(74) Representative: Müller, Enno, Dipl.-Ing.

(57) **Abstract**

In order to provide a windmill structure capable of preventing a blade from damage based on a strong wind, the windmill structure is for use in a wind power apparatus in which a dynamo-electric generator is driven by a main shaft to which a rotation of the windmill is transmitted. The windmill comprising at least one blade which extends in a radial direction from a blade supporting portion of a main shaft tip in relation to the main shaft. The windmill structure comprises the blade comprising a fixing portion supported on the blade supporting portion and extending to a radial direction, and a moving portion connected to an upper end of the fixing portion. The moving portion is capable of projecting and retreating from the fixing portion to the radial direction. The windmill structure further comprises control means for changing the projection length of the moving portion in accordance with a wind speed.

## Description

### BACKGROUND OF THE INVENTION:

The present invention relates to a windmill structure having a plurality of blades in a wind power apparatus.

A wind power apparatus is known which rotates a windmill having a plurality of propeller shaped blades, to generate electric power. In the wind power apparatus, the windmill and a dynamo-electric generator are installed at an upper end of supporting post. For example, the windmill has three blades which extend from a main shaft to a radial direction and which are positioned with a regular angle around the main shaft.

The wind power apparatus usually has sensors such as an anemoscope and an anemometer. In response to information obtained by the anemoscope, the windmill is directed to a direction at which wind blows. The windmill rotates by the wind which blows from the front. A plurality of publications such as patent publications 1 and 2 is well known in the art in concern to the wind power apparatus having such a windmill.

### (Patent Publication 1)

Japanese Unexamined Patent publication Tokkai Hei 8-128385

### (Patent Publication 2)

Japanese Unexamined Patent publication Tokkai 2000-87841

As described above, the windmill may be damaged by a strong wind exceeding the endurance of the windmill, in the windmill having the blades which extend from the main shaft to a radial direction. Although it is desired that the area for receiving the wind is large in each of the blades from wind power efficiency, the endurance decreases in relation to the strong wind in case where each of the blades has a large area for receiving the wind. Therefore, each of the blades is narrowed in order to endure the strong wind. In addition, each of the blades has a large length in order to enlarge the receiving area of wind.

Each of the patent publications 1 and 2 discloses a structure of controlling an effective area for receiving the wind by changing an angle in relation the wind in each of the blades for provision of strong wind, in order to preventing each of the blades from damage. More particularly, the surface of the blade is controlled to be parallel to the direction of the wind, in order to make the resistance be zero in relation to the wind.

By the way, each of the blades has no plane in the windmill and is twisted into a spiral shape which is directed from a base portion to a tip portion such as a propeller. In order to obtaining a rotating force, namely, in order to obtain a high power generating efficiency, the spiral shape is favorable. However, it is impossible to make the entire surface of the blade be parallel to the wind even if the attachment angle of the blade having the spiral shape is changed in every direction. In the blade having the surface of spiral shape, any portion of the blade always receives the resistance of the wind. The blade may be damaged in accordance with a wind pressure which is not less than the endurance of the blade.

### SUMMARY OF THE INVENTION

In order to dissolve the above-mentioned problems, it is an object of the present invention to provide a windmill structure comprising at least one blade having a desired spiral surface in order to obtain a high power generating efficiency and capable of preventing the blade from damage based on a strong wind.

In order to accomplish the above-mentioned object, according to a first aspect of the present invention, there is provided a windmill structure in which a dynamo-electric generator is driven by a main shaft to which a rotation of a windmill is transmitted. The windmill comprises at least one blade which extends in a radial direction from a blade supporting portion of a main shaft tip in relation to the main shaft. The windmill structure comprises the blade having a fixing portion supported on the blade supporting portion and extending to a radial direction, and a moving portion connected to an upper end of the fixing portion. The moving portion is capable of projecting and retreating from the fixing portion to the radial direction. The windmill structure further comprises control means for changing the projection length of the moving portion in accordance with a wind speed.

According to a second aspect of the present invention, the fixing portion comprises a front plate and a rear plate, a cavity portion being formed between said front plate and said rear plate. The moving portion is stored in the cavity portion of the fixing portion when the moving portion retreats.

According to a third aspect of the present invention, the control means comprises a male screw rod rotatably supported on the blade supporting portion and extending to the radial direction in the cavity portion of the fixing portion, a sensor for detecting the wind speed, driving means for make the male screw rod rotate in accordance with an output of the sensor, and a female screw plate fixed on the moving portion and screwed into the male screw rod. The female screw plate moves along the male screw rod on the basis of the rotation of the male screw rod so that the projection length of the moving portion is changed in accordance with the wind speed.

According to a fourth aspect of the present invention, the windmill structure comprises a bearing mounted on the fixing portion and a rail mounted on the moving portion. The rail is fitted into the bearing. The rail moves with the rail being fitted into the bearing when the moving portion projects and retreats.

### BRIEF DESCRIPTION OF THE DRAWINGS

Fig.1 shows an outside prospective view for briefly illustrating a windmill structure of a wind power apparatus according to the present invention;
Fig.2A shows a view for viewing a windmill in condition a blade has the longest length, from axis direction of a main shaft;
Fig.2B shows a view for viewing a windmill in condition a blade has the shortest length, from axis direction of a main shaft;
Fig.3A shows a prospective view for illustrating the blade of windmill in condition the blade has the longest length and an expanded view near the upper end of fixing portion;
Fig.3B shows a prospective view for illustrating the blade of windmill in condition the blade has a middle length and an expanded view near the lower end of moving portion;
Fig.3C shows a prospective view for illustrating the blade of windmill in condition the blade has the shortest length and an expanded view near the upper end of fixing portion;
Fig.4A shows a developed view in condition of cutting off a part, for illustrating a connecting portion between a moving portion and a fixing portion of one blade; and
Fig.4B shows a sectional view along X-X line of Fig.4A.

### PREFERRED EMBODIMENT OF THE INVENTION

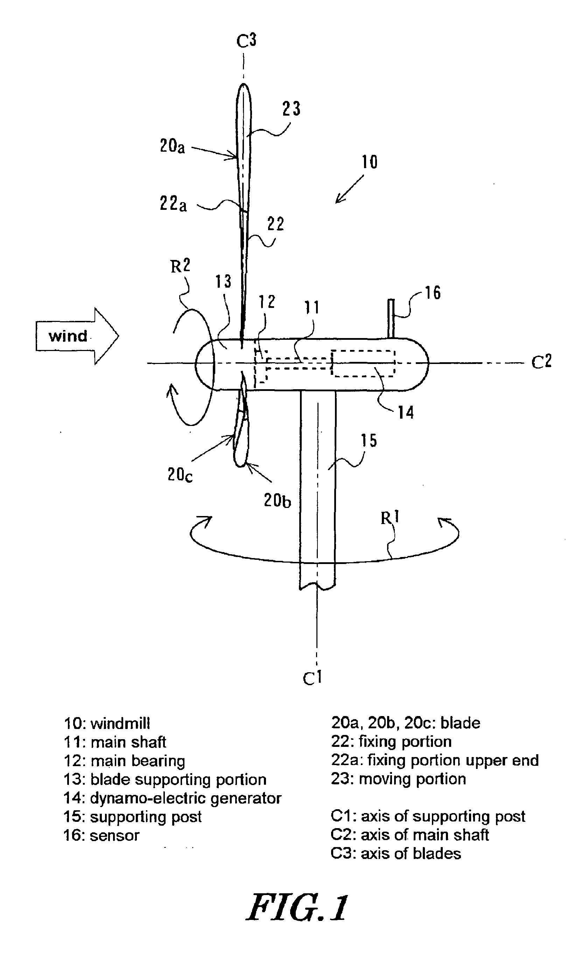

Fig.1 shows an outside prospective view for briefly illustrating a windmill structure of a wind power apparatus according to the present invention. A windmill 10 is installed on an upper end of a supporting post 15 together with a dynamo-electric generator 14. A reference sign C1 represents an axis of the supporting post 15. A blade supporting portion 13 is attached to a tip portion of a main shaft 11 (a left direction in Fig.1) for driving the dynamo-electric generator 14, through a main bearing 12. Three blades 20a, 20b, and 20c, which spirally extend in relation to the main shaft 11, are attached to the blade supporting portion 13 illustrated in Fig.1 with a regular interval of angle. A reference sign C2 represents an axis of the main shaft 11. The axis C2 of the main shaft 11 is controlled so as to be directed to the wind which blows to the windmill 10 (arrow R1). The rotary control is carried out on the basis of an output signal of an anemoscope which is included in a sensor.

Incidentally, the windmill structure is characterized by the structure of one blade. Therefore, the blades have structures which are similar to one another. The number of blades may be one or may be the plural number. When the blade 20a and so on rotate together with the blade supporting portion 13 by the wind, the rotation is transmitted to the main shaft 11 (arrow R2) and the dynamo-electric generator is driven by the rotation of the main shaft 11. As a result, power generation is carried out.

The blade 20a extends to a radial direction along a blade axis C3 perpendicular to the axis C2 of the main shaft 11. Inasmuch as the blade 20a has a propeller shape, the blade 20a has a spirally twisted surface. The blade 20a of the present invention is formed by connecting two members which are approximately equal in the length to each other. One member is a fixing portion 22 which is fixed to the blade supporting portion 13 and extends to a radial direction. Another member is a moving portion 23 which extends from the upper end 22a of the fixing portion 22 to the radial direction. The fixing portion 22 has a constant length. The moving portion 23 is capable of projecting from the upper end 22a of the fixing portion 22 and is capable of retreating from the upper end 22a of the fixing portion 22. It is possible to vary the projection length. In the condition of the windmill illustrated in Fig.1, the moving portion 23 is positioned in the condition of most projection. Namely, the blade 20a and so on have the longest lengths, respectively.

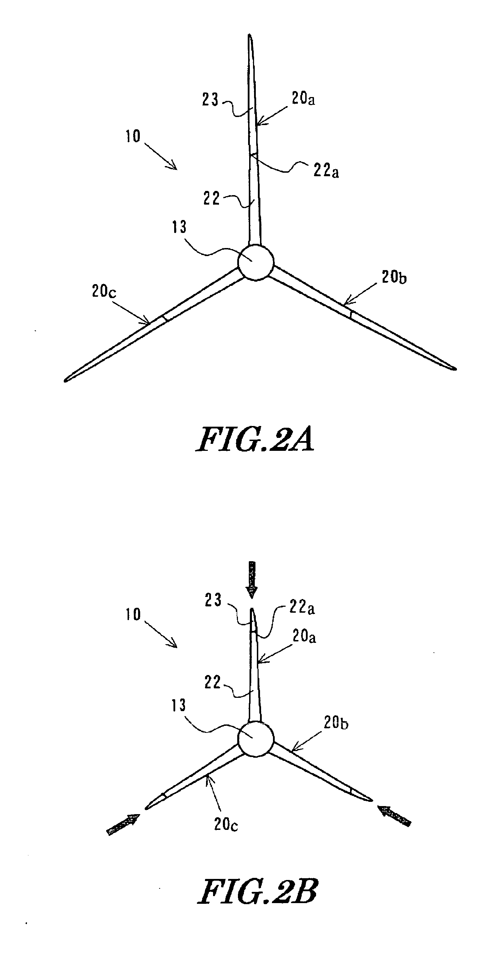

Fig.2A shows a view for viewing the windmill in condition the blade 20a and so on have the longest lengths, respectively, from axis direction of a main shaft. On the other hand, Fig.2B shows a view for illustrating the condition that the moving portion 23 retreats to a most retreat position, namely, Fig.2B shows a view for viewing a windmill in condition that the blade 20a and so on have the shortest lengths, respectively, from axis direction of a main shaft. As shown by an arrow, the moving portion 23 retreats and the length of the moving portion becomes short. Inasmuch as the receiving area of wind becomes small in the blade, the blade is hardly damaged by the strong wind in comparison to the condition of the Fig.2A.

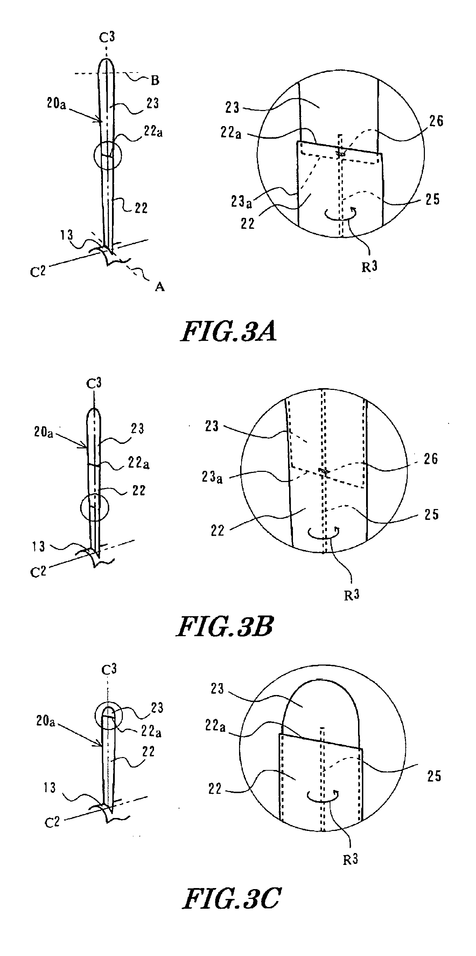

Fig.3A to 3C show views each of which illustrates a variation of length from the longest length to the shortest length in the blade 20a. Each left side drawing shows an outside prospective view of the blade 20a. Each right side drawing shows a briefly expanded view of a circular part of the respective left side drawing.

Fig.3A shows a view for illustrating the blade 20a having the longest length. The moving portion 23 is positioned at the most projection position. The surface near the base end portion of the blade 20a extends along a straight line A which is approximately perpendicular to the axis C3 of the main shaft 11. The surface near the tip of the blade 20a extends along a straight line B which is twisted in relation to the straight line A. When viewing the straight lines A and B from the direction of the blade axis C3, the straight lines A and B looks as if the straight lines A and B forms an angle of 40 degrees to 50 degrees. As described above, the blade 20a is spirally twisted although blade 20a has a width which is approximately equal from the base end portion to the tip portion.

As will be described hereinafter, a cavity portion is formed in the fixing portion 22. The moving portion is capable of being stored in the cavity portion of the fixing portion 22. Inasmuch as each of the fixing portion 22 and the moving portion has a common spiral surface with a constant twisted degree, the moving portion moves along the spiral and is stored in the fixing portion 22.

As shown in the right side drawing of Fig.3A, the lower end 23a (broken line) of the moving portion 23 is positioned near the upper end 22a of the fixing portion 22 in the condition that the moving portion 23 is positioned at the most projection position.

Although a detailed description will be made in Fig.5 as regards a mechanism will be described which is for making the moving portion 23 project and retreat, a male screw rod 25, which spirally extends in the cavity portion of the fixing portion 22 along the blade axis C3, is rotatably supported to the blade supporting on the outer surface of the male screw rod 25. The male screw rod 25 is driven so as to rotate in every direction by a driving means such as a motor which is not illustrated. The driving means such as a motor may be, for example, attached to the blade supporting portion 13. On the other hand, a female screw plate 26, which is screwed into the male screw rod 25, is fixed to the moving portion 23. A screw groove is formed on an inner surface of the female screw plate 26. As a result, the female screw plate 26 moves along the male screw rod 25 when the male screw rod 25 is rotated (arrow R3). The moving portion 23 moves together with the female screw plate 26.

Fig.3B shows a prospective view for illustrating the blade 20a in condition the blade has a middle length between the longest length and the shortest length. The moving portion 23 projects in a half-length of the entire length of the moving portion 23. As shown in the right side drawing of the Fig.3A, the lower half part of the moving portion 23 is stored in the cavity portion of the fixing portion 22. The position of the lower end 23a of the moving portion 23 sinks down from the position illustrated in Fig.3A.

Fig.3C shows a prospective view for illustrating the blade 20c in condition the blade has the shortest length. The moving portion 23 is positioned at the most retreat position. Namely, the moving portion 23 is stored in the cavity portion of the fixing portion 22 and the tip end of the moving portion 23 appears from the upper end 22a of the fixing portion 22.

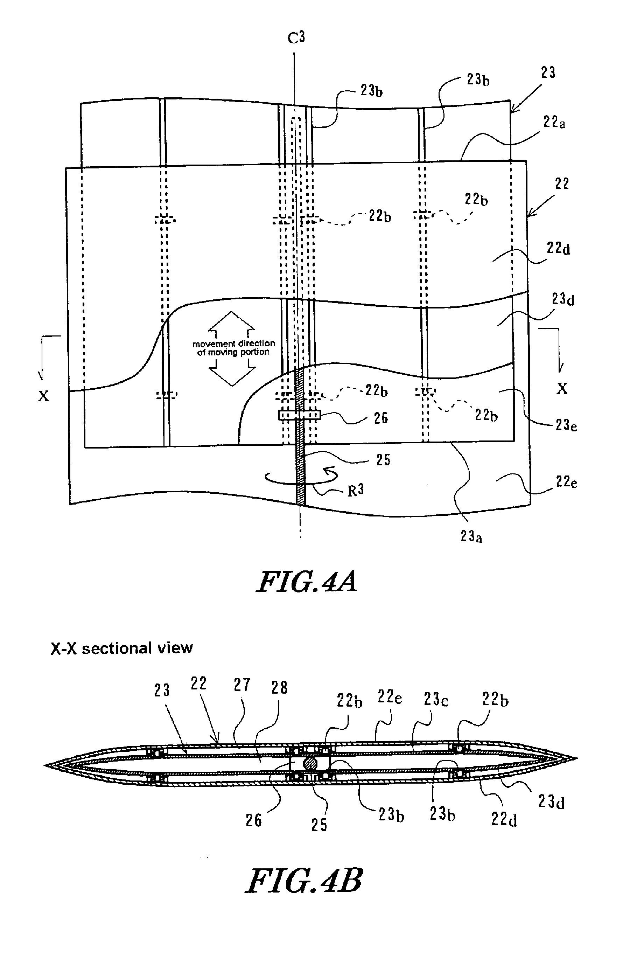

Fig.4A shows a developed view in condition of cutting off a part, for illustrating a connecting portion between the moving portion 23 and the fixing portion 22 of one blade. In addition, Fig.4B shows a sectional view along X-X line of Fig.4A. Incidentally, the thickness of the blade is magnified in Fig.4B. The fixing portion 22 comprises a front plate 22d and a rear plate 22e. The cavity portion 27 is formed between the front plate 22d and the rear plate 22e. In case where the moving portion 23 retreats, the moving portion 23 is stored in the cavity portion 27. The male screw rod 25 extends along the blade axis C3 in the cavity portion 27.

The base end of the male screw rod 25 is rotatably supported on the blade supporting portion 13 (referring to Fig.3A). The base end of the male screw rod 25 is capable of rotating in every direction by the driving means such as a motor. The driving means such as a motor is controlled in accordance with an output signal of a sensor such as an anemometer which detects a wind speed. As a result, the male screw rod 25 is rotated in an appreciate direction by the driving means. In case where the wind speed exceeds a tolerance range of the length of the blade, the blade, namely, the windmill is prevented from the damage based on the wind pressure, by retreating the moving portion 23 to shorten the length of the blade. In addition, the moving portion 23 is controlled to project and the length of the blade is lengthened in the tolerance range, in order to enlarge the receiving area of wind in the blade and raise an energy conversion efficiency of the wind.

The moving portion 23 comprises a front plate 23d and a rear plate 23e. A cavity portion 28 is formed between the front plate 23d and the rear plate 23e. The female screw plate 26 is fixed in the cavity portion 28 of the moving portion 23. Namely, the moving portion 23 moves together with the female screw plate 26. Inasmuch as the female screw plate 26 is screwed into the above-mentioned male screw rod 25, the female screw plate 26, namely, the moving portion 23 moves along the male screw rod 25, when making the male screw rod 25 rotate. In case of changing the rotating direction of the male screw rod 25, the movement direction varies in the female screw plate 26, namely, the moving portion 23. As described above, variation is carried out as regards the projection length from the fixing portion 22 in the moving portion 23.

As shown in Fig.4A and Fig.4B, rails 23b is mounted in the appreciate number on the outer surfaces of the front plate 23d and the rear plate 23e of the moving portion 23. The rails 23b extend along the movement direction of the moving portion 23. The rails 23b may be, for example, grooves which are formed on the outer surfaces of the front plate 23d and the rear plate 23e of the moving portion 23. Alternatively, the rails 23b may be other members which are mounted on the outer surfaces of the front plate 23d and the rear plate 23e of the moving portion 23. On the other hand, bearings 22b are mounted in the appreciate number on the fixing portion 22. The bearings 22b are fitted into the rails 23b. The bearings 22b are mounted on the inner surfaces the front plate 22d and the rear plate 22e of the fixing portion 22.

When the moving portion 23 retreats after the moving portion 23 projects from the fixing portion 22, the bearings 22b and the rails 23b move with the bearings 22b being fitted into the rails 23b, inasmuch as the bearings 22b are mounted on the fixing portion 22 and inasmuch as the rails 23b mounted on the moving portion 23 are capable of being fitted into the bearings 22b. As a result, it is possible to make the moving portion 23 smoothly move.

According the present invention as described above, it is possible to adjust the receiving area of wind on adjusting the length of the blade by making the moving portion project and retreat from the fixing portion in accordance with the wind speed, inasmuch as the blade comprises the fixing portion supported on the blade supporting portion and extending to the radial direction, and the moving portion connected to the upper end of the fixing portion, and the moving portion is capable of projecting and retreating from the fixing portion to the radial direction, and the windmill structure further comprises control means for changing the projection length of the moving portion in accordance with the wind speed.

In addition, the fixing portion comprises the front plate and the rear plate and the cavity portion is formed between the front plate and the rear plate. The moving portion is stored in the cavity portion of the fixing portion when the moving portion retreats. Inasmuch as each of the fixing portion and the moving portion has the propeller shape having a same twisted degree, it is possible to smoothly store the moving portion into the fixing portion.

Furthermore, the control means comprises the male screw rod rotatably supported on the blade supporting portion and extending to the radial direction in the cavity portion of the fixing portion, the sensor for detecting the wind speed, driving means for make the male screw rod rotate in accordance with the output of the sensor, and the female screw plate fixed on the moving portion and screwed into the male screw rod. The female screw plate moves along the male screw rod on the basis of the rotation of the male screw rod so that the projection length of the moving portion is changed in accordance with the wind speed. By making the supported male screw rod rotate, the female screw plate screwed into the male screw rod moves along the male screw rod. It is possible to make the female screw plate move to every direction on the basis of the rotation direction of the male screw rod. Inasmuch as the female screw plate is fixed to the moving portion, the moving portion moves together with the female screw plate. As a result, it is possible to make the moving portion move to the projection direction and the retreat direction.

In addition, the windmill structure comprises the bearing mounted on the fixing portion and the rail mounted on the moving portion. The rail is fitted into the bearing. The rail moves with the rail being fitted into the bearing when the moving portion projects and retreats. The bearing and rail function as a guide for guiding the moving portion when the moving portion projects and retreats. As a result, it is possible to make the moving portion smoothly project and retreat.

## Claims

1. A windmill structure for use in a wind power apparatus in which a dynamo-electric generator is driven by a main shaft to which a rotation of a windmill is transmitted, said windmill comprising at least one blade which extends in a radial direction from a blade supporting portion of a main shaft tip in relation to said main shaft, wherein said windmill structure comprises:
said blade comprising a fixing portion supported on said blade supporting portion and extending to a radial direction, and a moving portion connected to an upper end of said fixing portion, said moving portion being capable of projecting and retreating from said fixing portion to the radial direction; and
control means for changing the projection length of said moving portion in accordance with a wind speed.

2. A windmill structure for use in a wind power apparatus as claimed in Claim 1, wherein:
said fixing portion comprises a front plate and a rear plate, a cavity portion being formed between said front plate and said rear plate; and
said moving portion being stored in said cavity portion of the fixing portion when said moving portion retreats.

3. A windmill structure for use in a wind power apparatus as claimed in Claim 1 or 2, wherein:
said control means comprises a male screw rod rotatably supported on said blade supporting portion and extending to the radial direction in said cavity portion of the fixing portion, a sensor for detecting the wind speed, driving means for make said male screw rod rotate in accordance with an output of said sensor, and a female screw plate fixed on said moving portion and screwed into said male screw rod; and
said female screw plate moving along said male screw rod on the basis of the rotation of said male screw rod so that the projection length of said moving portion is changed in accordance with the wind speed.

4. A windmill structure for use in a wind power apparatus as claimed in any one of Claims 1 to 3, wherein:
said windmill structure comprises a bearing mounted on said fixing portion and a rail mounted on said moving portion, said rail being fitted into said bearing; and
said rail moving with said rail being fitted into said bearing when said moving portion projects and retreats.
